# EUROPEAN PATENT APPLICATION

(11) **EP 2 423 798 A1**
(43) Date of publication of application: **29.02.2012**
(21) Application number: 11178094.6
(22) Date of filing: 19.08.2011
(51) Int. Cl.: G06F 3/048, G06F 17/30

(54) **Method of providing search service by extracting keywords in specified region and display device applying the same**

(30) Priority: 31.08.2010 KR 20100085103
(71) Applicant: Samsung Electronics Co., Ltd., Suwon-si, Gyeonggi-do 442-742 (KR)
(72) Inventor: Chung, Ji-hye, Seoul (KR); Lee, Hye-jeong, Seoul (KR); Lim, Eun-young, Seoul (KR); Yang, Ji-sun, Incheon (KR); Yeo, Sin-oug, Seoul (KR)
(74) Representative: Davies, Robert Ean

(57) **Abstract**

A method of providing a search service and a display device applying the same are provided. The method of providing a search service selects a partial region of a screen if a user's specified operation is input, extracts a plurality of keywords using the selected region, displays a list of the plurality of keywords, and searches for information based on one of the plurality of keywords. Accordingly, the display device can receive the keyword through the selection of the region. Accordingly, a user can input a desired search keyword through an input of only an operation for selecting the region.

## Description

### CROSS-REFERENCE TO RELATED PATENT APPLICATION

This application claims priority from Korean Patent Application No. 10-2010-0085103, filed on August 31, 2010 in the Korean Intellectual Property Office, the disclosure of which is incorporated herein in its entirety by reference.

### BACKGROUND

### 1. Field

Apparatuses and methods consistent with exemplary embodiments relate to providing a search service and a display device applying the same, and more particularly to providing a search service and a display device applying the same, which can provide an Internet search service in the display device.

### 2. Description of the Related Art

Recently, a technology that can provide various kinds of services through the Internet has been applied to a TV which receives broadcasts. For example, an IPTV is connected to the Internet and executes applications such as widget and the like.

In this case, the TV may adopt a web browser and provide an Internet service. In this case, it is required for a user to execute the web browser by pressing a specified button on a remote controller for web browser connection or through a menu.

However, in the case of using the Internet through the TV, the Internet browser hides the screen of the TV, and thus a user is unable to concentrate his/her attention on the TV screen. Also, since the TV has insufficient user interface that is required to use the Internet browser, the user may feel inconvenience when the user uses the web browser through the TV.

In particular, since it is difficult for a user to input characters using a TV remote controller, the keyword input and Internet search using the TV may cause the user great inconvenience.

A user desires a display device with which the user can perform a search service more easily using a web browser. Accordingly, there is a need for schemes for enabling a user to easily perform keyword input and search.

### SUMMARY

One or more exemplary embodiments have been made to address at least the above problems and/or disadvantages and to provide at least the advantages described below. Accordingly, one or more exemplary embodiments provide a method of providing a search service and a display device applying the same, which select a partial region of a screen if a user's specified operation is input, extract plural keywords using the selected region, display a list of plural keywords, and search for information based on one of the plural keywords.

According to one aspect of an exemplary embodiment, a method of providing a search service includes selecting a partial region of a screen if a user's specified operation is input; extracting a plurality of keywords using the selected region; displaying a list of the plurality of keywords; and searching for information based on one of the plurality of keywords.

The specified operation may be a long touch operation that is an operation of touching the screen for a predetermined time, and the selected region may include a point to which the long touch operation is input.

The specified operation may be a flick operation that is an operation of moving in a specified direction in a state of touching the screen and then taking off from the screen, and the selected region may include a path in which the flick operation is input.

A keyword input column may be extended in a search window and the list of the plurality of keywords may be displayed thereon.

The list of the plurality of keywords may be displayed on the region where the specified operation is input.

Texts included in the selected region may be extracted as the plurality of keywords.

The method of providing a search service according to an exemplary embodiment may further include displaying a web page screen; wherein the extracting step extracts the texts included in the selected region from the web page screen as the keywords.

A keyword related to an image included in the selected region may be included in the extracted plurality of keywords.

The extracted plurality of keywords may include at least one of title information of the image, file name information, writer information, and text included in an image included in the selected region.

According to another aspect of an exemplary embodiment, a display device includes a communication unit communicably connected to an external server that provides a search service; and a control unit which selects a partial region of a screen if a user's specified operation is input, extracts a plurality of keywords using the selected region, displays a list of the plurality of keywords, and searches for information based on one of the plural keywords.

The specified operation may be a long touch operation that is an operation of touching the screen for a predetermined time, and the selected region may include a point to which the long touch operation is input.

The specified operation may be a flick operation that is an operation of moving in a specified direction in a state of touching the screen and then taking off from the screen, and the selected region may include a path in which the flick operation is input.

The control unit may extend a keyword input column of a search window and display the list of the plurality of keywords thereon.

The control unit may operate to display the list of the plurality of keywords on the region where the specified operation is input.

The control unit may extract texts included in the selected region as the plurality of keywords.

The control unit may operate to display a web page screen, and extract the texts included in the selected region from the web page screen as the plurality of keywords.

The control unit may extract a keyword related to an image included in the selected region.

The extracted plurality of keywords may include at least one of title information of the image, file name information, writer information, and text included in the image.

According to exemplary embodiments, a method of providing a search service and a display device applying the same can be provided, which select a partial region of a screen if a user's specified operation is input, extract a plurality of keywords using the selected region, display a list of the plurality of keywords, and search for information based on one of the plurality of keywords. Accordingly, the display device can receive the keyword through the selection of the region. Accordingly, a user can input a desired search keyword through an input of only an operation for selecting the region.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a block diagram illustrating the configuration of a TV according to an exemplary embodiment;

FIG. 2 is a flowchart illustrating a method of providing a search service according to an exemplary embodiment;

FIGS. 3A to 3D are diagrams illustrating a process of selecting a partial region of a screen using a long touch operation according to an exemplary embodiment;

FIGS. 4A to 4D are diagrams illustrating a process of selecting a partial region of a screen using a flick touch operation according to an exemplary embodiment; and

FIGS. 5A to 5C are diagrams illustrating a case where a TV screen is pre-divided into plural blocks according to an exemplary embodiment.

### DETAILED DESCRIPTION OF EXEMPLARY EMBODIMENTS

Hereinafter, exemplary embodiments will be described in detail with reference to the accompanying drawings. Expressions such as "at least one of," when preceding a list of elements, modify the entire list of elements and do not modify the individual elements of the list.

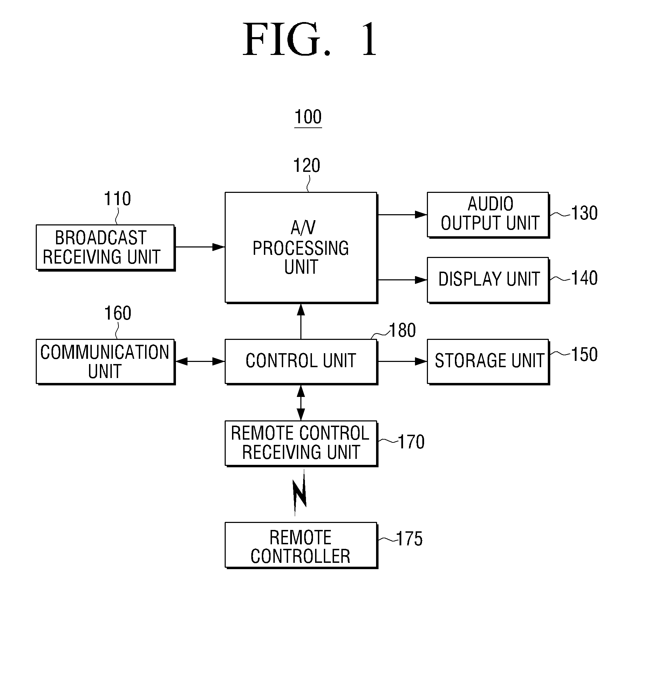

FIG. 1 is a block diagram illustrating the configuration of a TV 100 according to an exemplary embodiment. As illustrated in FIG. 1, the TV 100 includes a broadcast receiving unit 110, an A/V processing unit 120, an audio output unit 130, a display unit 140, a storage unit 150, a communication unit 160, a remote control receiving unit 170, and a control unit 180.

The broadcast receiving unit 110 receives a broadcasting signal by wire or wirelessly from a broadcasting station or a satellite and demodulates the received broadcasting signal. Also, the broadcast receiving unit 110 can receive broadcasting information.

Also, the broadcast receiving unit 110 separates the received signal into a video signal and an audio signal, and a signal separation unit (not shown) transmits the video signal and the audio signal to the A/V processing unit 120. The signal separation unit may be part of the broadcast receiving unit 110 or may even be part of the A/V processing unit 120.

The A/V processing unit 120 performs signal processing, such as video decoding, video scaling, audio decoding, and the like, with respect to the video signal and the audio signal input from the signal separation unit. Also, the A/V processing unit 120 outputs the processed video signal to the display unit 140, and outputs the processed audio signal to the audio output unit 130.

The audio output unit 130 outputs sound corresponding to the audio output signal from the A/V processing unit 120 through a speaker or to an external device (for example, external speaker) connected through an external output terminal.

The display unit 140 displays an image corresponding to the video output signal from the A/V processing unit 130 on a display. That is, the display unit 140 displays a broadcasting image that corresponds to the broadcasting signal received by the broadcast receiving unit 110.

Also, the display unit 140 may display a search window on a partial region of the screen. Here, the search window is a window that is provided to perform Internet information search. That is, the search window corresponds to a window that is display by an application that performs the Internet search based on the input keyword. The search window functions to search for information that can be searched through diverse Internet sites and the Internet and to display the result of search.

The search window includes a search keyword input region for a user to input a search keyword, and a search result display region for displaying the result of search. Also, a keyword list may be additionally displayed on the search window. Here, the keyword list corresponds to a list of keywords extracted from the specified region selected by a user's operation.

The storage unit 150 stores a plurality of programs for operation of the TV 100. Also, the storage unit 150 may store a recorded image file. The storage unit 150 may be implemented by a hard disc, a nonvolatile memory, and the like.

The communication unit 160 communicably connects the TV 100 to a communication network such as the Internet. Specifically, the communication unit 160 is connected to a search engine server that provides the Internet search service through the communication network such as the Internet. Also, the communication unit 160 transmits the input keyword to the search engine server, and receives search results that correspond to the keyword from the server.

The remote control receiving unit 170 receives a command from the remote controller 175, and transmits the command to the control unit 180. As an example, the remote control receiving unit 170 may receive an input of a user's operation for changing the size of the search window from the remote controller 175.

The control unit 180 grasps a user command based on the contents of the user's operation that is transferred from the remote controller 175, and controls the operation of the TV 100 in accordance with the user command.

Specifically, the control unit 180 may select a specified region of a portion of the screen according to the user's operation. Here, the specified region represents a screen region that becomes the subject of keyword extraction. For example, if a specified point of the screen is selected by the user, the control unit 180 may select a region of a preset area that includes the corresponding point as the specified region. In addition, the control unit 180 may select the specified region through a plurality of user operations. Also, the control unit 180 may select the whole screen region as the specified region.

Specifically, if a long touch operation that is a user's operation of touching the screen for a predetermined time is input, the control unit 180 may select the region of the preset area that includes the point to which the long touch operation is input. For example, if the user performs a long touch of the specified point, the control unit 180 may select a square region, of which one side is 3 cm, around the specified point as the specified region.

Also, if a flick operation, which is an operation of moving in a specified direction in a state of touching the screen and then taking off from the screen, is input by a user, the control unit 180 may select the region of the preset area that includes the path through which the flick operation is input as the specified region.

The control unit 180 may extract the keyword using the selected region. The control unit 180 may extract the keyword using the selected region using a plurality of methods and algorithms.

Exemplarily, in a case where the TV 100 displays the current video content, the control unit 180 processes the image displayed on the selected region and extracts information that corresponds to the processed image. For example, if the image displayed on the selected specified region is a face of a person, the control unit 180 recognizes the person whose face is included in the specified region through a face recognition technology Also, the control unit 180 may further extract a name, a position, and the like, of the corresponding person as the keywords. For example, if the face included in the specified region is the face of "Park Ji-sung", the control unit 180 extracts "Park Ji-sung", "Manchester United", "Korea", and the like, as the keywords.

Exemplarily, in a case where the TV 100 currently displays video content, the control unit 180 may extract the keywords based on the information of the image that is currently displayed. Specifically, the TV 100 may extract at least one of title information of the image that is currently displayed, file name information, writer information, and text included in the image as the keyword.

Exemplarily, in a case where the TV 100 currently displays a web page screen, the control unit 180 may extract the keyword based on the web page content included in the selected region among the web page screens.

Specifically, if the text contents of the web page are included in the selected specified region, the control unit 180 may extract the text of the web page in the specified region, and extracts the keywords using the extracted text. For example, the control unit 180 may select a word having a high frequency of repetition among the extracted texts as the keyword, select a word represented by bold as the keyword, or select a word represented by large characters as the keyword.

Also, in a case where the web page image is included in the selected specified region, the control unit 180 may extract information related to the image by processing the web page image in the specified region, and extract the keywords using the information related to the extracted image.

The control unit 180 may then search for information based on the keyword selected by the user among the plural extracted keywords. In this case, the control unit 180 may further display a keyword list on the screen so that a user can select the keyword.

In this case, the control unit 180 may extend a keyword input column of a search window and display the keyword list thereon. Specifically, the keyword list may be displayed in a manner that the keyword input region is extended upwardly. Also, the control unit 180 may operate to display the list of the plural keywords in the neighborhood of the region where the specified operation is input.

As described above, if the user selects a desired keyword from the keyword list, the control unit 180 performs a search using the selected keyword. It will be understood that more than one keyword may be selected simultaneously and the control unit 180 may perform a simultaneous search for one or more of the selected keywords.

Also, the control unit 180 may automatically select a specified keyword among the plural extracted keywords, and search for information based on the selected keyword. In the case of automatically selecting the keyword, the control unit 180 selects the keyword by a specified reference. For example, the control unit may select the keyword having the highest keyword priority.

The control unit 180 searches for information through the communication unit 160 using the keyword extracted and selected as described above. Specifically, the control unit 180 transmits a search query to the search engine server using the extracted keyword. Also, the control unit 180 receives search result list information from the search engine server, and displays the search result list information on the screen.

As described above, the TV 100 extracts the keywords corresponding to the specified region, and performs search using the extracted keyword.

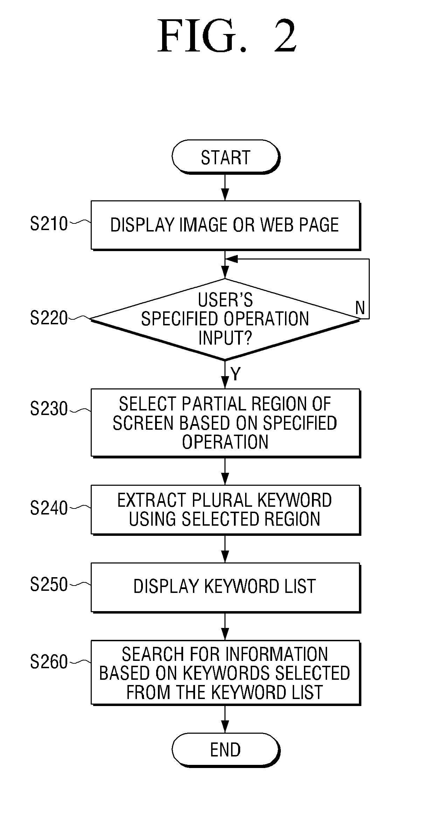

Hereinafter, with reference to FIG. 2, a method of providing a search service for extracting a keyword from a specified region will be described. FIG. 2 is a flowchart illustrating a method of providing a search service according to an exemplary embodiment.

First, the TV 100 displays an image or a web page on the screen (S210). Next, the TV 100 determines whether a user's specified operation is input (S220). Exemplarily, the control unit 180 determines whether a user's specified operation is input. Here, the specified operation represents an operation for selecting a partial region of the screen.

Then, if the user's specified operation is input (S220-Y), the TV 100 selects the specified region of a portion of the screen according to the user's operation (S230). Exemplarily, the control unit 180 selects the specified region of the portion of the screen according to the user's operation. Here, the specified region represents a screen region that is the subject of keyword extraction.

Specifically, a long touch operation that is a user's operation of touching the screen for a predetermined time may be the specified operation. If the long touch operation is input to the specified point by the user, the TV 100 selects the region of the preset area that includes the point to which the long touch operation is input. For example, if the user performs a long touch of the specified point, the TV 100 selects a square region, of which one side is 3 cm, around the specified point as the specified region.

Also, a flick operation, which is an operation of moving in a specified direction in a state of touching the screen and then taking off from the screen, may be the specified operation. If a flick operation is input to the specified point by a user, the TV 100 selects the region of the preset area that includes the path through which the flick operation is input as the specified region.

In addition, the TV 100 selects the specified region through a wide range of user operations. Also, the TV 100 may select the whole screen region as the specified region.

Then, the TV 100 extracts the keyword using the selected region (S240). The TV 100 extracts the keyword using the selected region using a plurality of methods and algorithms. Exemplarily, the control unit 180 extracts the keyword using the selected region.

Exemplarily, in a case where the TV 100 displays the current video content, the TV 100 may process the image displayed on the selected region and extract information that corresponds to the processed image. For example, if the image displayed on the selected specified region is a face of a person, the TV 100 recognizes the person whose face is included in the specified region through a face recognition technology. Also, TV 100 may extract a name, a position, and the like, of the corresponding person as the keywords. For example, if the face included in the specified region is the face of "Park Ji-sung", the TV 100 extracts "Park Ji-sung", "Manchester United", "Korea", and the like, as the keywords.

Exemplarily, in a case where the TV 100 currently displays the video content, the TV 100 may extract the keywords based on the information of the image that is currently displayed. For example, the TV 100 may extract the title of an image that is currently displayed.

Exemplarily, in a case where the TV 100 currently displays a web page screen, the TV 100 may extract the keyword based on the web page content included in the selected region among the web page screens.

Exemplarily, if the text contents of the web page are included in the selected specified region, the TV 100 may extract the text of the web page in the specified region, and extract the keywords using the extracted text. For example, the TV 100 may select a word having a high frequency of repetition among the extracted texts as the keyword, select a word represented by bold as the keyword, or select a word represented by large characters as the keyword.

Also, in the case where the web page image is included in the selected specified region, the TV 100 may extract information related to the image by processing the web page image in the specified region, and extract the keywords using the information related to the extracted image.

Thereafter, the TV 100 displays the keyword list for the plural extracted keywords (S250). This is for the user to select a desired keyword from the keyword list. Exemplarily, this displaying may be controlled by the control unit 180.

To display the keyword list, the TV 100 may extend a keyword input column of a search window and display the keyword list thereon. 'Exemplarily the keyword list may be displayed in a manner that the keyword input region is extended upwardly. Also, the control unit 180 may operate to display the list of the plural keywords in the neighborhood of the region where the specified operation is input.

Thereafter, the TV 100 searches for information based on the keyword selected by the user among the plural extracted keywords (S260). Exemplarily, if a user selects a desired keyword from the keyword list displayed on the screen, the TV 100 performs the search using the selected keyword. Exemplarily, the search may be controlled by the control unit 180 in response to the selection by the user.

Also, the TV 100 may automatically select a specified keyword among the plural extracted keywords, and search for information based on the selected keyword. In the case of automatically select the keyword, the TV 100 may select the keyword by a specified reference. For example, the TV 100 may select the keyword having the highest keyword priority. Exemplarily, such automatic selection and searching may be performed by the control unit 180.

The TV 100 searches for information through the communication unit 160 using the keyword extracted and selected as described above. Exemplarily, the TV 100 transmits a search query to the search engine server using the extracted keyword. Also, the TV 100 receives search result list information from the search engine server, and displays the search result list information on the screen. Exemplarily, the searching for information through the communication unit 160 may be controlled by the control unit 180.

If the information search as described above is completed, the TV 100 displays the search result list of which the search has been completed on the search window.

Through the above described process, the TV 100 selects the specified region using diverse methods, extracts the keywords corresponding to the specified region, and performs the search using the extracted keyword. Accordingly, the user can input a desired keyword by inputting only the operation for selecting the specified region of the screen without a separate keyword input procedure.

Exemplarily, the control unit 180 may include logic units that carry out steps 210 thru steps 260. For example, the control unit 180 may include a display image unit which carries out step 210, a user input determination unit which carries out step 220, a partial region selecting unit which carries out step 230, a keyword extraction which carries out step 240, a keyword display unit which carries out step 250, and a search coordination unit which carries out step 260.

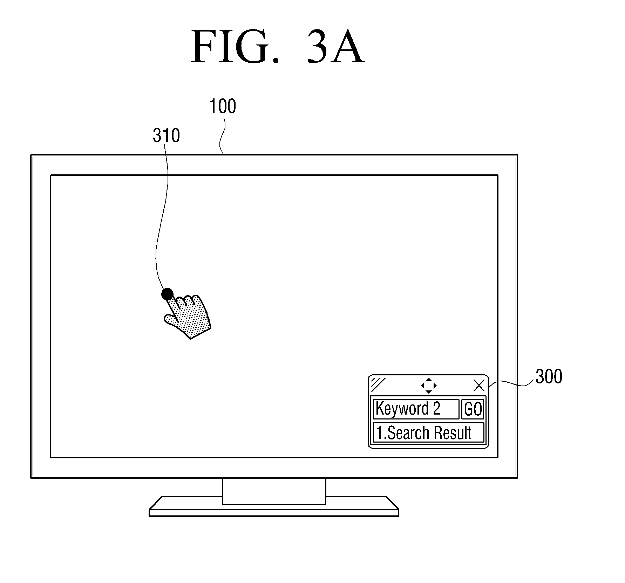

FIGS. 3A to 3D illustrate a process of selecting a partial region of a screen using a long touch operation according to an exemplary embodiment.

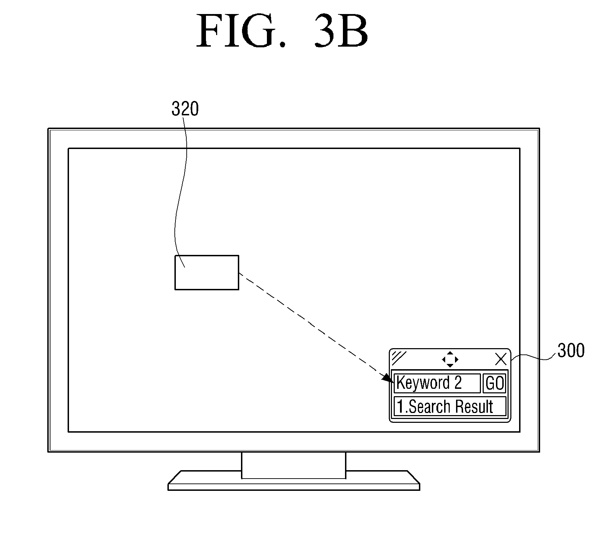

FIG. 3A illustrates a state where a search window 300 is displayed on the TV 100. As illustrated in FIG. 3A, if a user performs a long touch of the specified point 310, the TV 100 selects the specified region 320 including the specified point 310 as illustrated in FIG. 3B.

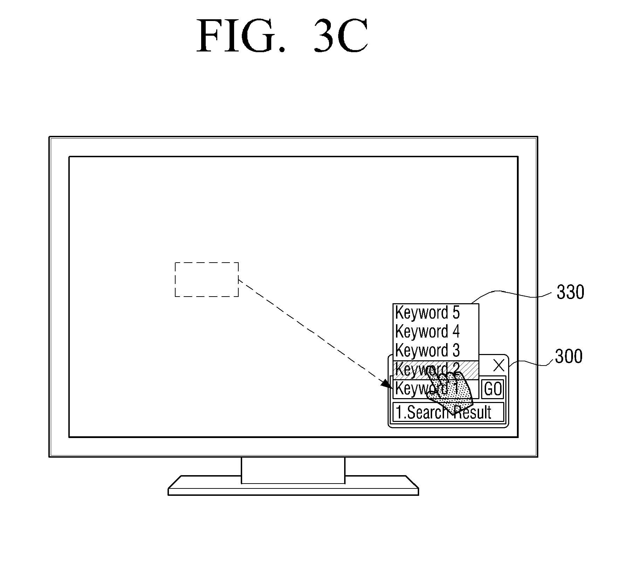

Thereafter, as illustrated in FIG. 3C, the TV 100 extends the keyword input region and displays the keyword list 330. Here, the keywords included in the keyword list 330 correspond to the keywords related to the specified region 320.

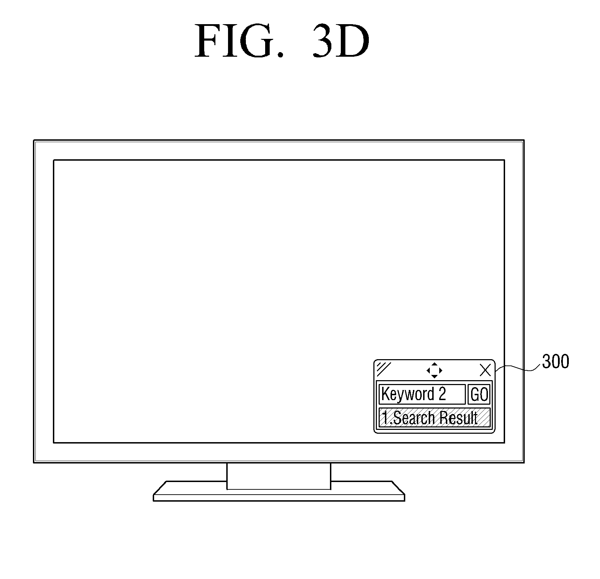

Thereafter, as illustrated in FIG. 3D, the TV 100 inputs "Keyword 2" to the keyword input regions of the search window 300. Exemplarily, the TV 100 may input the "Keyword 2" to the keyword input region of the search window 300 in response to a selection of "Keyword 2" by the user.

As described above, if the long touch operation is input to the screen, the TV 100 selects a region of a specified area that includes the point to which the touch operation is input. Then, the TV 100 extracts the keyword related to the selected specified region, and performs the search using the extracted keyword. Accordingly, a user can easily perform the keyword input and the search work only by inputting the long touch operation. Exemplarily, the search may be performed for an extracted keyword selected by the user.

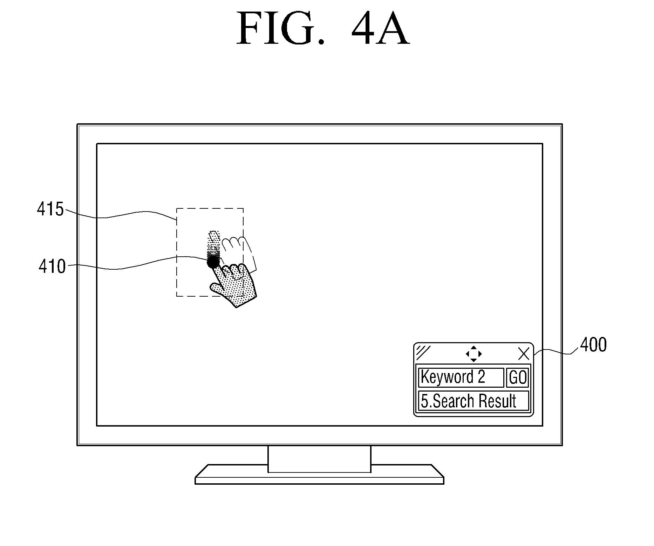

FIGS. 4A to 4D illustrate a process of selecting a partial region of a screen using a flick touch operation according to an exemplary embodiment.

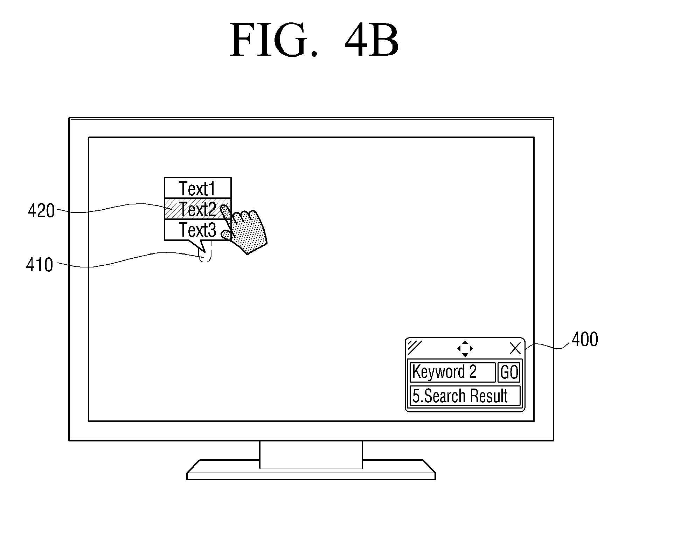

FIG. 4A illustrates a state where a search window 400 is displayed on the TV 100. As illustrated in FIG. 4A, if a user inputs a flick touch operation to the specified point 410 in a downward direction, the TV 100 selects the specified region 415 including the specified point 410 as illustrated in FIG. 4B. As illustrated in FIG. 4B, it can be confirmed that the specified region 415 is a region of a preset area that includes the flicked specified point 410.

Thereafter, as illustrated in FIG. 4B, the TV 100 displays a keyword list 420 in the neighborhood of the specified point 410 to which the user's flick operation is input. Here, the keywords included in the keyword list 420 correspond to the keywords related to the specified region 415 that includes the point 410 to which the flick operation is input. Exemplarily, as illustrated in FIG. 4B, the TV 100 displays the keyword list 420 on the point 410 to which the flick operation is input.

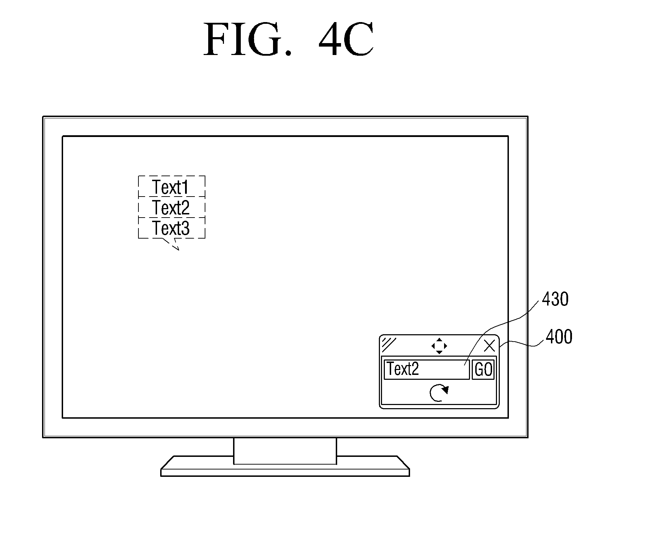

As illustrated in FIG. 4B, if "text 2" is selected from the keyword list 420, as illustrated in FIG. 4C, the TV 100 inputs the "text 2" to the keyword input region 430 of the search window 400 as the keyword.

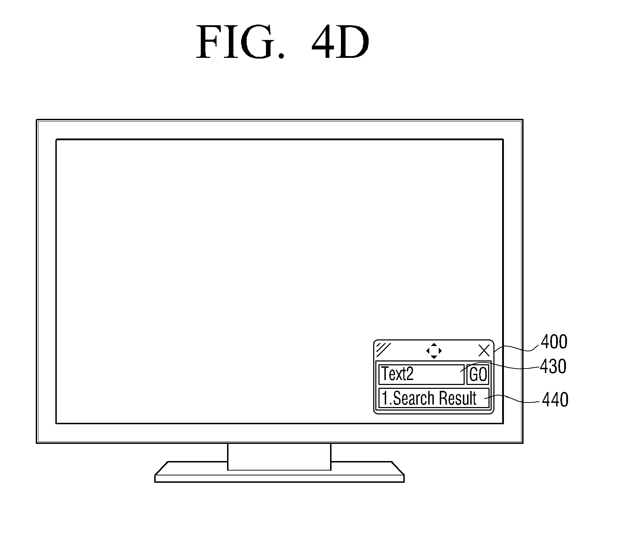

In this state, if a search performance command is input by a user, the TV 100 performs a search for information related to "text 2". Also, as illustrated in FIG. 4D, the TV 100 displays the search result on the search result display region 440.

As described above, if the flick touch operation is input to the screen, the TV 100 selects the region of the specified area that includes the point to which the flick touch operation is input. Also, the TV 100 performs the search with the extracted keyword. Accordingly, a user can easily perform the keyword input and the search work only by inputting the flick touch operation.

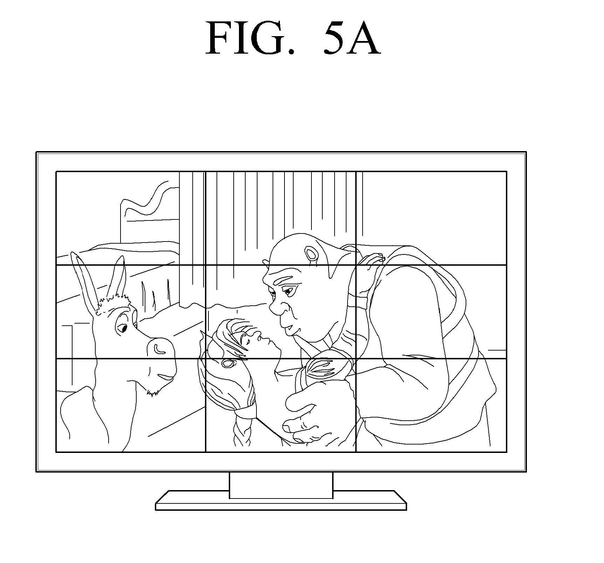

FIGS. 5A to 5C illustrate a case where a TV screen is pre-divided into plural blocks according to an exemplary embodiment. As illustrated in FIG. 5A, the screen of the TV 100 may be pre-divided into plural regions. In FIG. 5A, the screen has been divided into 9 regions. As described above, the screen of the TV 100 is pre-divided, and keyword extraction may be performed only in the region selected by the user.

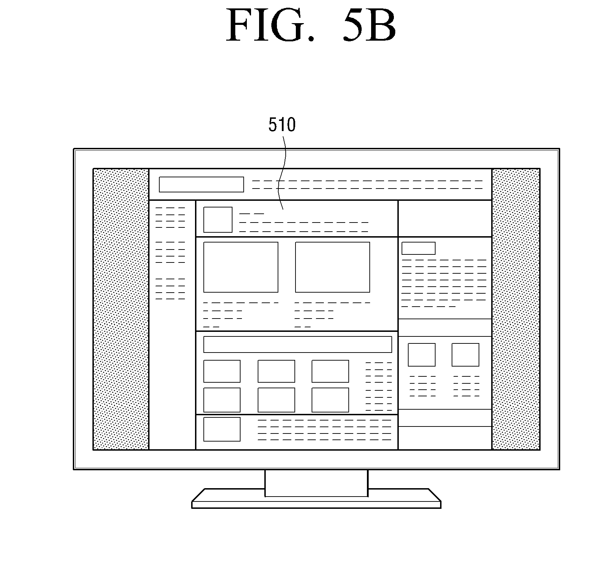

FIG. 5B illustrates a web site. As illustrated in FIG. 5B, the web site is composed of various kinds of independent regions. Accordingly, the TV 100 selects any one of the independent regions of the web site as the specified region that is the subject of keyword extraction in accordance with the user's operation.

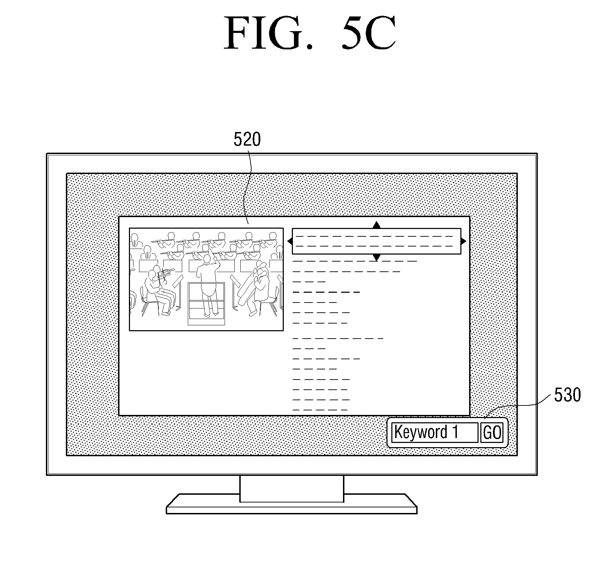

For example, if the first region 510 is selected as illustrated in FIG. 5B, the TV 100 displays an extended image 520 that is obtained by extending the first region 510 as illustrated in FIG. 5C. Also, it can be confirmed that a search window 530 in which the keyword related to the first region 510 is input is displayed as illustrated in FIG. 5C.

As described above, by dividing the screen of the TV 100 into plural regions and selecting any one of the divided regions, a specified region that is the subject of keyword extraction can be selected.

On the other hand, in this exemplary embodiment, as an operation for selecting the specified region, a long touch and a touch-and-drag are exemplified. However, other operations may also be included to select the specified region. For example, a gyro sensor or an acceleration sensor may be included in the remote controller to perform a pointing operation. In this case, the long touch operation of the touch operation as illustrated in FIGS. 3A to 3D corresponds to the long pointing operation of the pointing operation of the remote controller. Also, the touch-and-drag operation of the touch operation as illustrated in FIGS. 4A to 4D corresponds to the pointing-and-drag operation of the pointing operation of the remote controller.

As described above, the user can select the specified region using the pointing operation of the remote controller.

Also, in this exemplary embodiment, it is exemplified that the display device is the TV. However, any display device that can perform the Internet search function can also be applied in addition to the TV 100. For example, the display device may be a portable phone, a PMP, an MP3, and the like, to which the technical features described above can be applied.

While not restricted thereto, above-described exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Exemplarily, a general purpose processor may execute instructions embodied on a computer-readable storage medium to perform the functions of the control unit 180.

Aspects of the disclosed exemplary embodiments may be implemented as an entirely hardware embodiment, an entirely software embodiment (including firmware, resident software, micro-code, etc.) or an embodiment combining software and hardware aspects.

The blocks in the flowchart or block diagrams may represent a module, segment, or portion of code, which comprises one or more executable instructions for implementing the specified logical functions. Furthermore, the functions noted in the block may occur out of the order noted in the figures. Further, each block of the block diagram and/or flowchart illustration, and combinations of blocks in the block diagrams and/or flowchart illustration, can be implemented by special purpose hardware-based systems that perform the specified functions or acts, or combinations of special purpose hardware and computer instructions.

While exemplary embodiments have been shown and described, it will be understood by those skilled in the art that various changes in form and detail may be made therein without departing from the spirit and scope of the inventive concepts described therein, as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing a search service, the method comprising:
selecting a partial region of a screen if a user's specified operation is input;
extracting a plurality of keywords using the selected region of the screen;
displaying a list of the plurality of keywords; and
searching for information based on one of the plurality of keywords.

2. The method of providing a search service as claimed in claim 1, wherein the specified operation is a long touch operation that is an operation of touching the screen for a predetermined time, and
the selected region includes a point to which the long touch operation is input.

3. The method of providing a search service as claimed in claim 1, wherein the specified operation is a flick operation that is an operation of moving in a specified direction in a state of touching the screen and then taking off from the screen, and
the selected region includes a path in which the flick operation is input.

4. The method of providing a search service as claimed in any one of claim 1 to 3, wherein a keyword input column is extended in a search window and the list of the plurality of keywords is displayed thereon.

5. The method of providing a search service as claimed in any one of claim 1 to 3, wherein the list of the plurality of keywords is displayed on the region where the specified operation is input.

6. The method of providing a search service as claimed in any one of claim 1 to 5, wherein texts included in the selected region are extracted as the plurality of keywords.

7. The method of providing a search service as claimed in claim 6, further comprising displaying a web page screen,
wherein the selected region is a partial region of the web page screen, and the texts included in the selected region from the web page screen are extracted as the plurality of keywords.

8. The method of providing a search service as claimed in any one of claim 1 to 5, wherein the extracted plurality of keywords include a keyword related to an image included in the selected region.

9. The method of providing a search service as claimed in claim 8, wherein the extracted plurality of keywords include at least one of title information of the image, file name information, writer information, and text included in the image.

10. A display device comprising:
a communication unit which communicably connects to an external server that provides a search service; and
a control unit which selects a partial region of a screen if a user's specified operation is input, extracts a plurality of keywords using the selected region, displays a list of the plurality of keywords, and searches for information based on one of the plurality of the keywords.

11. The display device as claimed in claim 10, wherein the specified operation is a long touch operation that is an operation of touching the screen for a predetermined time, and
the selected region includes a point to which the long touch operation is input.

12. The display device as claimed in claim 10, wherein the specified operation is a flick operation that is an operation of moving in a specified direction in a state of touching the screen and then taking off from the screen, and
the selected region includes a path in which the flick operation is input.

13. The display device as claimed in any one of claim 10 to 12, wherein the control unit extends a keyword input column in a search window and displays the list of the plurality of keywords thereon.

14. The display device as claimed in any one of claim 10 to 12, wherein the control unit operates to display the list of the plurality of keywords on the region where the specified operation is input.

15. The display device as claimed in any one of claim 10 to 14, wherein the control unit extracts texts included in the selected region as the plurality of keywords.
